# EUROPEAN PATENT APPLICATION

(11) **EP 4 765 350 A1**
(43) Date of publication of application: **24.06.2026**
(21) Application number: 24892792.3
(22) Date of filing: 25.06.2024
(51) Int. Cl.: H01M 50/103

(54) **BATTERY CELL, BATTERY, ENERGY STORAGE DEVICE, AND ELECTRIC DEVICE**

(30) Priority: 24.11.2023 WO PCT/CN2023/134129; 30.11.2023 CN 202323280449 U
(71) Applicant: Contemporary Amperex Technology Co., Limited, Ningde, Fujian 352100 (CN)
(72) Inventor: LIN, Denghua, Ningde, Fujian 352100 (CN); YANG, Xiao, Ningde, Fujian 352100 (CN); CAO, Mengkai, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2024/101375
(87) International publication number: WO 2025/107627

(57) **Abstract**

A battery cell (10), a battery (100), an energy storage device (2000), and an electric device. The battery cell (10) comprises a casing (11). An opening (11a) is formed in an end portion of the casing (11) in a first direction. In the circumferential direction of the opening (11a), the casing (11) comprises first walls (110), corner areas (112), and second walls (113) which are connected in sequence. Each first wall (110) is provided with a first body portion (1100) and a first thickening portion (1101) which are arranged in the first direction, the first body portion (1100) is farther from the opening (11a) than the first thickening portion (1101), and the maximum thickness of the first thickening portion (1101) is greater than that of the first body portion (1100). Each corner area (112) is provided with a second body portion (1120) and a second thickening portion (1121) which are arranged in the first direction, the second body portion (1120) is farther from the opening (11a) than the second thickening portion (1121), and the maximum thickness of the second thickening portion (1121) is greater than that of the second body portion (1120). The provided technical solution can improve the reliability of the battery cell (10).

## Description

### CROSS-REFERENCE TO RELATED APPLICATIONS

The present application claims the priority of PCT patent application PCT/CN2023/134129 entitled "CASE, BATTERY CELL, BATTERY, AND ELECTRICAL DEVICE" filed on November 24, 2023, and the priority of Chinese patent application 202323280449.1 entitled "BATTERY CELL, BATTERY, ENERGY STORAGE DEVICE, AND ELECTRICAL DEVICE" filed on November 30, 2023, and the entire contents of the above applications are incorporated herein by reference.

### TECHNICAL FIELD

The present application relates to the technical field of batteries, and in particular to a battery cell, a battery, an energy storage device, and an electrical device.

### BACKGROUND

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

In the development of the battery technology, how to improve the reliability of the batteries is an urgent technical problem to be solved in the battery technology.

### SUMMARY

The present application provides a battery cell, a battery, an energy storage device and an electrical device. The technical solution provided in the present application can improve the reliability of the battery cell.

The present application is implemented through technical solutions as follows.

In a first aspect, some embodiments of the present application provide a battery cell. The battery cell includes a case. An opening is formed at an end of the case along a first direction. Along a circumference direction of the opening, the case includes a first wall, a corner area and a second wall which are connected in sequence. The first wall includes a first body portion and a first thickened portion arranged along the first direction, the first body portion is farther away from the opening than the first thickened portion, and the maximum thickness of the first thickened portion is greater than the thickness of the first body portion. The corner area includes a second body portion and a second thickened portion arranged along the first direction, the second body portion is farther away from the opening than the second thickened portion, and the maximum thickness of the second thickened portion is greater than the thickness of the second body portion.

In the above solution, by providing the first thickened portion on the first wall, the problem of a heat-affected zone of lower strength formed in the case due to welding, which causes the first wall to crack due to insufficient strength when impacted, can be ameliorated, so that the battery is more reliable. Moreover, by providing a second thickened portion in the corner area, the strength of the portion of the corner area corresponding to the opening can be improved, and the problem of stress concentration in the case manufacturing process caused by providing the first thickened portion (for example, when the case is formed by drawing, the stress generated during demolding will be concentrated on the portion of the corner area corresponding to the opening) causing cracks in the corner area is ameliorated, so that the battery cell is more reliable.

According to some embodiments of the present application, the maximum thickness of the second thickened portion is greater than the maximum thickness of the first thickened portion.

In the above solution, by providing the maximum thickness of the second thickened portion to be greater than the maximum thickness of the first thickened portion, the strength of the portion of the corner area corresponding to the opening can be effectively improved. On the one hand, the overall thickness of the case can be effectively increased to reduce the risk of cracking of the case due to impact. On the other hand, the stress concentration during the case manufacturing process, which causes the problem of cracking in the corner area, can be effectively ameliorated, so that the battery cell is more reliable.

According to some embodiments of the present application, the maximum thickness of the second thickened portion is T1, the thickness of the second body portion is T2, the maximum thickness of the first thickened portion is t1, and the thickness of the first body portion is t2, satisfying E ≥ F, where E = (T1-T2)/T2, and F = (t1-t2)/t2.

In the above solution, by limiting the degree E of thickening of the second thickened portion compared to the second body portion to be no less than the degree F of thickening of the first thickened portion compared to the first body portion, the problem of stress concentration in the case manufacturing process caused by providing the first thickened portion, resulting in cracks in the corner area, can be effectively ameliorated, so that the battery cell is more reliable.

According to some embodiments of the present application, the maximum thickness of the second thickened portion is T1, and the thickness of the second body portion is T2, satisfying 0 < E < 30%, where E = (T1-T2)/T2.

In the above solution, by limiting the degree E of thickening of the second thickened portion compared to the second body portion, on the one hand, the strength of the corner area can be improved, and the risk of cracking of the corner area due to stress concentration can be reduced. On the other hand, the risk of bulging corner area and deforming the shell due to excessive stress is reduced, so that the battery cell is more reliable.

According to some embodiments of the present application, 0 < E ≤ 16.7% is satisfied.

In the above solution, by limiting the degree E of thickening of the second thickened portion relative to the second body portion to no more than 16.7%, on the one hand, the problem of cracking caused by stress concentration and deformation caused by excessive stress can be solved. On the other hand, the weight of the case can be effectively controlled, which is beneficial to the improvement of the weight energy density of the battery cell.

According to some embodiments of the present application, along the first direction, a distance from one end of the second thickened portion, located farther away from the opening, to the opening is L1, satisfying 0 < L1 ≤ 20 mm.

In the above solution, along the first direction, by arranging a second thickened portion in the corner area within 20 mm below the opening, the strength of the portion of the corner area corresponding to the opening can be effectively improved, and the risk of cracking in the corner area due to stress concentration on the portion of the corner area corresponding to the opening during the case manufacturing process caused by thickening the first wall can be reduced, so that the battery cell is more reliable.

According to some embodiments of the present application, along the first direction, a distance from one end of the first thickened portion, located farther away from the opening, to the opening is L2, satisfying 0 < L2 ≤ 20 mm.

In the above solution, along the first direction, by providing a first thickened portion in the area of the first wall within 20 mm below the opening, the strength of the portion of the first wall corresponding to the opening can be effectively improved, and the risk of the first wall being easily cracked by impact due to the formation of a heat-affected zone with lower strength caused by the welding of the case of the first wall at the portion corresponding to the opening, can be reduced, so that the battery cell is more reliable.

According to some embodiments of the present application, an area of an outer surface of the first wall is greater than an area of an outer surface of the second wall.

In the above solution, by providing the first thickened portion on the first wall with a larger outer surface area, the risk of the case being easily cracked by impact can be effectively ameliorated, so that the battery cell is more reliable.

According to some embodiments of the present application, along the second direction, the case includes two of the first walls disposed opposite to each other, and along the third direction, the case includes two of the second walls disposed opposite to each other, and the second direction, the third direction and the first direction are perpendicular to one another. The adjacent first wall and second wall are connected through the respective corner area, and the first wall, the second wall and the corner area together form the opening.

In the above solution, the case can be of a square structure. By thickening the two wall portions that are disposed opposite to each other along the second direction, that is, providing the first thickened portion, the structural strength of the case can be effectively improved, and the risk of the case being cracked by impact can be reduced. Moreover, by thickening the corner area between two adjacent wall portions, that is, providing a second thickened portion, the problem of cracking in the corner area due to stress concentration can be ameliorated, so that the battery cell is more reliable.

According to some embodiments of the present application, the second wall has a third body portion and a third thickened portion arranged along the first direction, the third body portion is farther away from the opening than the third thickened portion, and the maximum thickness of the third thickened portion is greater than the thickness of the third body portion.

In the above solution, by providing a third thickened portion with a larger maximum thickness on the second wall, the risk of a heat-affected zone with lower strength formed by welding the case, which causes the second wall to crack due to insufficient strength when impacted, can be ameliorated, so that the battery cell is more reliable.

According to some embodiments of the present application, the maximum thickness of the second thickened portion is greater than the maximum thickness of the third thickened portion.

In the above solution, by providing the maximum thickness of the second thickened portion to be greater than the maximum thickness of the third thickened portion, the strength of the portion of the corner area corresponding to the opening can be effectively improved. On the one hand, the overall thickness of the case can be effectively increased to reduce the risk of cracking of the case due to impact. On the other hand, the stress concentration in the corner area during the case manufacturing process, which causes the problem of cracking in the corner area, can be effectively ameliorated, so that the battery cell is more reliable.

According to some embodiments of the present application, the maximum thickness of the second thickened portion is T1, the thickness of the second body portion is T2, the maximum thickness of the third thickened portion is t3, and the thickness of the third body portion is t4, satisfying E ≥ G, where E = (T1-T2)/T2, and G = (t3-t4)/t4.

In the above solution, by limiting the degree E of thickening of the second thickened portion compared to the second body portion to be no less than the degree G of thickening of the third thickened portion compared to the third body portion, the problem of stress concentration in the corner portion corresponding to the opening during the case manufacturing process caused by providing the third thickened portion, resulting in cracking in the corner area, can be effectively ameliorated, so that the battery cell is more reliable.

According to some embodiments of the present application, along the first direction, a distance from one end of the third thickened portion, located farther away from the opening, to the opening is L3, satisfying 0 < L3 ≤ 20 mm.

In the above solution, along the first direction, by providing a third thickened portion in the area of the second wall within 20 mm below the opening, the strength of the second wall corresponding to the opening can be effectively improved, reducing the risk of the second wall being easily cracked by impact, so that the battery cell is more reliable.

According to some embodiments of the present application, the battery cell further includes an end cover, the end cover closing the opening. The third thickened portion includes a first section and a second section connected to each other, the first section, the second section and the third body portion are distributed in sequence along the first direction, the maximum thickness of the second section is greater than the thickness of the third body portion, the maximum thickness of the second section is greater than the maximum thickness of the first section, and the end cover is connected to the first section.

In the above solution, by providing the thickness of the second section of the third thickened portion to be greater than the thickness of the third body portion, the strength of the second wall can be effectively improved, and the risk of the second wall cracking due to impact can be reduced, so that the battery cell is more reliable.

According to some embodiments of the present application, a first step surface is formed between the second section and the first section, and the end cover is lapped on the first step surface.

In the above solution, the first step surface formed between the second section and the first section can enable the end cover to lap the first step surface, thereby facilitating the positioning and assembly of the end cover. Moreover, the first step surface can support the end cover, which can reduce the risk of the end cover collapsing, thereby making the battery cell more reliable.

According to some embodiments of the present application, the battery cell further includes an end cover, the end cover closing the opening. The second thickened portion includes a third section and a fourth section connected to each other, the third section, the fourth section and the second body portion are distributed in sequence along the first direction, the maximum thickness of the fourth section is greater than the thickness of the second body portion, the maximum thickness of the fourth section is greater than the maximum thickness of the third section, and the end cover is connected to the third section.

In the above solution, by providing the thickness of the fourth section of the second thickened portion to be greater than the thickness of the second body portion, the strength of the corner area can be effectively improved, reducing the risk of cracking in the corner area due to impact or stress concentration during demolding, so that the battery cell is more reliable.

According to some embodiments of the present application, a second step surface is formed between the fourth section and the third section, and the end cover is lapped on the second step surface.

In the above solution, the second step surface formed between the fourth section and the third section enables the end cover to lap the second step surface, thereby facilitating the positioning and assembly of the end cover. Moreover, the second step surface supports the end cover, which can reduce the risk of the end cover collapsing, thereby making the battery cell have higher reliability.

According to some embodiments of the present application, the battery cell further includes an end cover, the end cover is welded to the second thickened portion to form a fusion zone, the average grain size of the second thickened portion other than the fusion zone is greater than the average grain size of the second body portion, and the average grain size is the average grain size of the grains in the first direction.

In the above solution, by limiting the average grain size of the second thickened portion other than the fusion zone to be larger than the average grain size of the second body portion, it is beneficial to the improvement of the strength of the corner area, such that the second thickened portion has higher strength, reducing the risk of cracking of the corner area near the fusion zone due to impact and the risk of cracking of the corner area due to stress concentration during demolding, so that the battery cell is more reliable.

According to some embodiments of the present application, on a cross section of the corner area parallel to the first direction, in a portion of the second thickened portion below the fusion zone, the number of grains in the width direction of the cross section is greater than or equal to 15.

In the above solution, in the width direction of the cross section, the number of grains is greater than or equal to, which is beneficial to enhance the strength of the second thickened portion, reducing the risk of case cracking, and improving the reliability of the battery cell.

According to some embodiments of the present application, the average grain size of the second thickened portion other than the fusion zone is in a range of 70 microns - 1200 microns; and/or, the average grain size of the second body portion is in a range of 30 µm - 1000 µm; and/or, the maximum wall thickness of the end cover is 0.25 mm - 3 mm.

In the above solution, the average grain size of the second thickened portion and/or the average grain size of the second body portion satisfies the above relationship, which is beneficial the improvement of the strength of the second thickened portion, so that the battery cell is more reliable.

In a second aspect, the present application further provides a battery, including a battery cell of the first aspect.

In a third aspect, the present application further provides an energy storage device, including a battery cell of the first aspect.

In a fourth aspect, the present application further provides an electrical device, including a battery cell of the first aspect, for providing electrical energy.

Other aspects and advantages of the present application will be given in the following description, some of which will become apparent from the following description or may be learned from practices of the present application.

### BRIEF DESCRIPTION OF THE DRAWINGS

To describe the technical solutions of the embodiments of the present application more clearly, the following briefly describes the accompanying drawings required for describing the embodiments. It should be understood that, the following accompanying drawings show only some embodiments of the present application, which should not be considered as a limitation on the scope. A person of ordinary skill in the art may still derive other related accompanying drawings according to the accompanying drawings without creative efforts.
FIG. 1 is a schematic diagram of a vehicle according to some embodiments of the present application;
FIG. 2 is a schematic diagram of an energy storage device according to some embodiments of the present application;
FIG. 3 is an exploded view of a battery according to some embodiments of the present application;
FIG. 4 is an exploded view of a local structure of a battery cell according to some embodiments of the present application;
FIG. 5 is a front view of a battery cell according to some embodiments of the present application;
FIG. 6 is a cross-sectional view taken along the line A-A in FIG. 5;
FIG. 7 is an enlarged view at a position B in FIG. 6;
FIG. 8 is a cross-sectional view taken along the line C-C in FIG. 5;
FIG. 9 is an enlarged view at a position D in FIG. 8;
FIG. 10 is a structural schematic diagram of the interior of a battery cell according to some embodiments of the present application;
FIG. 11 is an enlarged view of position H in FIG. 10;
FIG. 12 is an enlarged view of position L in FIG. 4; and
FIG. 13 is a schematic diagram of an end cover and a corner area according to some embodiments of the present application.

Description of reference numerals: 100-battery; 10-battery cell; 11-case; 12-electrode assembly; 13-electrode terminal; 11a-opening; 14-end cover; 110-first wall; 1100-first body portion; 1101-first thickened portion; 112-corner area; 1120-second body portion; 1121-second thickened portion; 1121a-third section; 1121b-fourth section; 1121c-second step surface; 113-second wall; 1130-third body portion; 1131-third thickened portion; 1131a-first section; 1131b-second section; 1131c- first step surface; 114-fusion zone; 20-box; 21-first box portion; 22-second box portion; z-first direction; x-second direction; y-third direction; 1000-vehicle; 200-controller; 300-motor; 2000-energy storage device; and 2001-cabinet.

### DETAILED DESCRIPTION

The embodiments of the technical solution of the present application will be described in detail below with reference to the accompanying drawings. The following embodiments are only used to describe the technical solutions of the present application more explicitly, and are thus only interpreted as examples, rather than used to limit the protection scope of the present application.

Unless otherwise defined, meanings of all technical and scientific terms used in this specification are the same as those usually understood by a person skilled in the art to which the present application belongs. Terms used herein are merely intended to describe the specific embodiments, instead of limiting the present application. The terms "include", "have", and any variant thereof in the description and the claims of the present application and the description of the drawings are intended to cover a non-exclusive inclusion.

In the description of the embodiments of the present application, the technical terms "first", "second", and the like are only intended to distinguish different objects, and should not be understood as indicating or implying relative importance or implying the number, specific order or primary and secondary relationship of indicated technical features. In the description of the embodiments of the present application, "multiple" means two or more, unless otherwise expressly and specifically defined.

Embodiment mentioned in the specification means that particular features, structures, or characteristics described with reference to the embodiment may be included in at least one embodiment of the present application. The term appearing at different positions of this description may not refer to the same embodiment or an independent or alternative embodiment that is mutually exclusive with another embodiment. A person skilled in the art explicitly or implicitly understands that the embodiments described in the specification may be combined with other embodiments.

In the description of the embodiments of the present application, the term "and/or" is merely an association to describe associated objects, and means that three relationships may be exist. For example, A and/or B may represent the following three cases: A exists alone, A and B exist at the same time, and B exists alone. In addition, the character "/" in this specification generally indicates an "or" relationship between the associated objects.

In the descriptions of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the present application and simplifying the description, rather than indicating or implying that the involved device or element should have a specific orientation or should be configured or operated in the specific orientation, and thus cannot be understood as limitations on the embodiments of the present application.

In the description of the embodiments of the present application, unless otherwise explicitly specified or defined, the technical terms such as "install", "connected", "connect", and "fix" should be understood in a broad sense. For example, it may be fixed connection, detachable connection, or integral connection; or it may be mechanical connection or electrical connection; or the connection may be a direct connection, an indirect connection through an intermediate medium, internal communication between two components, or an interaction relationship between two components. For those skilled in the art, the specific meanings of the above terms in the embodiments of the present application may be interpreted according to the specific situations.

In the present application, battery cells may include a lithium-ion secondary battery, a lithium-ion primary battery, a lithium-sulfur battery, a sodium-lithium-ion battery, a sodium-ion battery, a magnesium-ion battery, or the like, without limitation in the embodiments of the present application. The battery cell may be in a cuboid shape, or in others, without limitation in the embodiments of the present application. A battery mentioned in embodiments of the present application is a single physical module including one or more battery cells to provide a higher voltage and a higher capacity. The battery typically includes a box for enclosing one or more battery cells. The box can prevent liquid or other foreign objects from affecting charging or discharging of the battery cell.

The battery cell includes an electrode assembly and an electrolyte solution, and the electrode assembly is formed by a positive electrode plate, a negative electrode plate, and a separator. The battery cell works mainly relying on movement of metal ions between the positive electrode plate and the negative electrode plate. The positive electrode plate includes a positive electrode current collector and a positive electrode active material layer. A surface of the positive electrode current collector is coated with the positive electrode active material layer. The positive electrode current collector not coated with the positive electrode active material layer protrudes out of the positive electrode current collector already coated with the positive electrode active material layer. The positive electrode current collector not coated with the positive electrode active material layer is used as a positive electrode tab. By using a lithium ion battery as an example, a material of the positive electrode current collector may be aluminum, and a positive electrode active material may be lithium cobalt oxide, lithium iron phosphate, ternary lithium, lithium manganese oxide, or the like. The negative electrode plate includes a negative electrode current collector and a negative electrode active material layer. A surface of the negative electrode current collector is coated with the negative electrode active material layer. The negative electrode current collector not coated with the negative electrode active material layer protrudes from the negative electrode collector already coated with the negative electrode active material layer. The negative electrode current collector not coated with the negative electrode active material layer is used as a negative electrode tab. The material of the negative electrode current collector may be copper, and the negative electrode active material may be carbon, silicon, etc. To ensure that no fusing occurs when a large current passes through, a plurality of positive electrode tabs are provided and stacked, and a plurality of negative electrode tabs are provided and stacked. The material of the separator may be PP (polypropylene) or PE (polyethylene), etc. In addition, the electrode assembly may be either of a winding type structure or a stacked structure. This is not limited in the embodiments of the present application. The battery cell further includes a case and an end cover, and the electrode assembly and the electrolyte are provided in the case. The case is formed with an opening along the first direction, and the end cover is welded to the case to close the opening of the case. In some embodiments, along the circumference direction of the opening, the case includes a first wall, a corner area, and a second wall connected in sequence, the first wall is adjacent to the second wall, and the first wall and the second wall are connected through a transitional corner area.

Design factors in many aspects need to be all considered for the development of the battery technology, such as an energy density, a cycle life, discharge capacity, a charge-discharge rate, and other performance parameters. In addition, the reliability of the battery also needs to be considered. For a battery cell, after the end cover and the case are welded, a heat-affected zone which reduces the strength of the case is often formed below a weld pool, causing cracking of the case when the battery cell is impacted or expands internally, thereby resulting in battery failure. To alleviate this problem, currently the wall portion of the battery case is thickened or partially thickened, for example, the first wall of the case is thickened in a portion corresponding to the opening to improve the strength of the case. However, this type of case is made by a drawing forming process. When the case is elastically demolded, the stress is concentrated on the portion of the corner area corresponding to the opening, which may easily cause cracking of the corner area, affecting the reliability of the battery cell and further affecting the reliability of the battery.

In view of this, in order to alleviate the problem of the reliability of the battery cell being affected because of the cracking of the corner area due to stress concentration during elastic demolding of the case, some embodiments of the present application provide a battery cell, and the battery cell includes a case. An opening is formed at an end of the case along a first direction. Along a circumference direction of the opening, the case includes a first wall, a corner area, and a second wall which are connected in sequence. The first wall includes a first body portion and a first thickened portion arranged along the first direction, the first body portion is farther away from the opening than the first thickened portion, and a maximum thickness of the first thickened portion is greater than a thickness of the first body portion. The corner area includes a second body portion and a second thickened portion arranged along the first direction, the second body portion is farther away from the opening than the second thickened portion, and a maximum thickness of the second thickened portion is greater than a thickness of the second body portion.

In the above solution, by providing the first thickened portion with a larger maximum thickness on the first wall, a risk of forming a heat-affected zone with lower strength in the case due to welding and therefore resulting in cracking due to insufficient strength when the first wall is impacted can be alleviated, so that the battery is more reliable. Moreover, by providing the second thickened portion with a larger maximum thickness in the corner area, the strength of a portion, corresponding to the opening, of the corner area can be improved, and a problem of cracking in the corner area due to stress concentration caused by providing the first thickened portion during elastic demolding of the case can be alleviated, so that the battery cell is more reliable.

The technical solutions described in the embodiments of the present application are applicable to a battery, an energy storage device having a battery module, and an electrical device using a battery module.

The energy storage device may include a plurality of battery cells, and the plurality of battery cells may be connected in series connection, in parallel connection, or series-parallel connection. The energy storage device may be a device capable of storing electrical energy, such as an energy storage cabinet or an energy storage box.

The electrical device may be a vehicle, a mobile phone, a portable device, a laptop, a ship, a spacecraft, an electric toy, a power tool, and the like. The vehicle may be a new energy vehicle. The new energy vehicle may be a pure electric vehicle, a hybrid electric vehicle, an extended range vehicle, or the like. The spacecraft includes an airplane, a rocket, a space shuttle, a spacecraft, or the like. The electric toy includes a fixed or mobile electric toy, for example, a game console, an electric car toy, an electric ship toy, and an electric airplane toy. The electric tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The foregoing electrical device is not specifically limited in the embodiments of the present application.

For ease of description, the following embodiments are described by using an example in which the electrical device is a vehicle 1000.

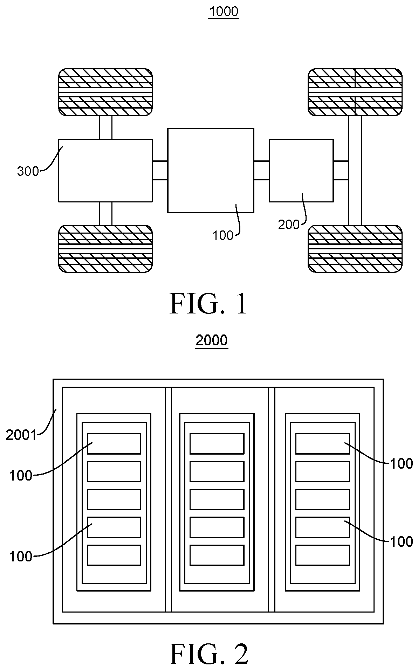

FIG. 1 is a schematic diagram of a vehicle 1000 according to some embodiments of the present application.

A controller 200, a motor 300 and a battery 100 may be arranged inside the vehicle 1000, and the controller 200 is configured to control the battery 100 to supply power to the motor 300. For example, the battery 100 may be arranged in the front, or in the rear of the vehicle 1000. The battery 100 may be configured to supply power to the vehicle 1000. For example, the battery 100 may be used as an operating power supply of the vehicle 1000 and used for a circuit system of the vehicle 1000, for example, may be used for operating electricity requirements during starting, navigation, and operation of the vehicle 1000. In another embodiment of the present application, the battery 100 can be used not only as the operating power supply of the vehicle 1000, but also as a driving power supply of the vehicle 1000, to alternatively or partially replace fuel or natural gas to provide driving power for the vehicle 1000.

FIG. 2 is a schematic diagram of an energy storage device according to some embodiments of the present application. The energy storage device 2000 may be a device for storing electrical energy. For example, the energy storage device 2000 may include an energy storage cabinet, and the energy storage cabinet includes a cabinet 2001 and one or more batteries 100 disposed in the cabinet. The cabinet 2001 may include a cabinet body and a cabinet door. One or more batteries 100 are disposed in the cabinet body. The cabinet door closes the opening of the cabinet body such that the one or more batteries 100 are in a closed space, reducing the interference of external substances on the battery 100.

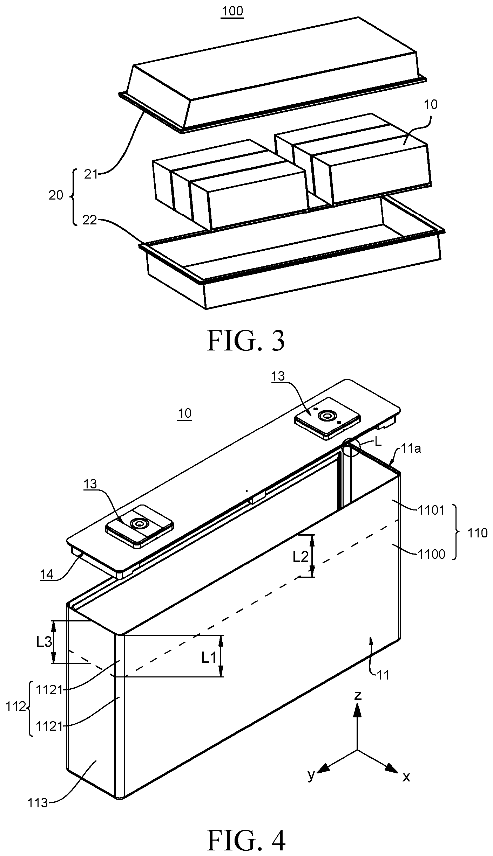

Referring to FIG. 3, FIG. 3 is an exploded view of a battery 100 according to some embodiments of the present application.

The battery 100 includes a battery cell 10 and a box 20, where the battery cell 10 is accommodated in the box 20. The box 20 is configured to provide an accommodating space for the battery cell 10. The box 20 may be of a variety of structures. In some embodiments, the box 20 may include a first box portion 21 and a second box portion 22, the first box portion 21 and the second box portion 22 cover each other, and the first box portion 21 and the second box portion 22 together define the accommodating space for accommodating the battery cell 10. The second box portion 22 may be of a hollow structure with an opening 11a on an end, the first box portion 21 may be of a plate-like structure, and the first box portion 21 covers an opening 11a side of the second box portion 22, so that the first box portion 21 and the second box portion 22 together define the accommodating space. Alternatively, each of the first box portion 21 and the second box portion 22 may be of a hollow structure with an opening 11a on a side, and the opening 11a side of the first box portion 21 covers the opening 11a side of the second box portion 22. Certainly, the box 20 formed by the first box portion 21 and the second box portion 22 may be in various shapes, such as a cylinder and a cuboid.

In the battery 100, there may be one or more battery cells 10, and each battery cell 10 may be fixed to the box 20 by a connector (such as a bolt), or each battery cell 10 may be fixed to the box 20 by bonding.

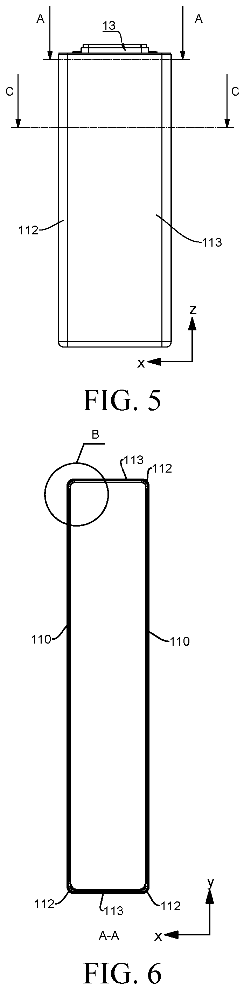

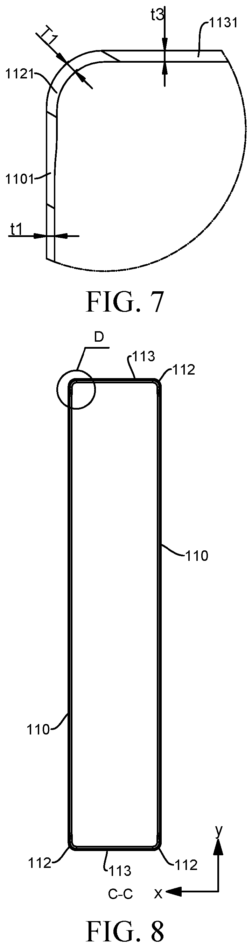

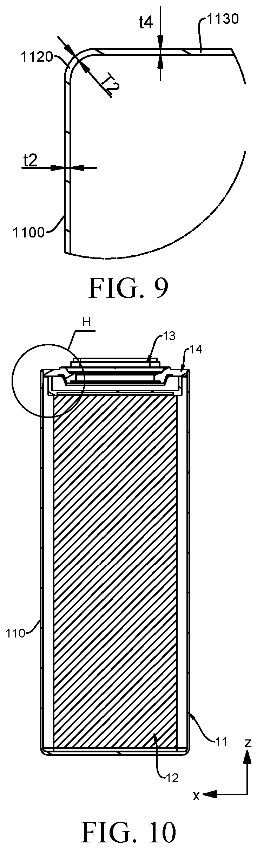

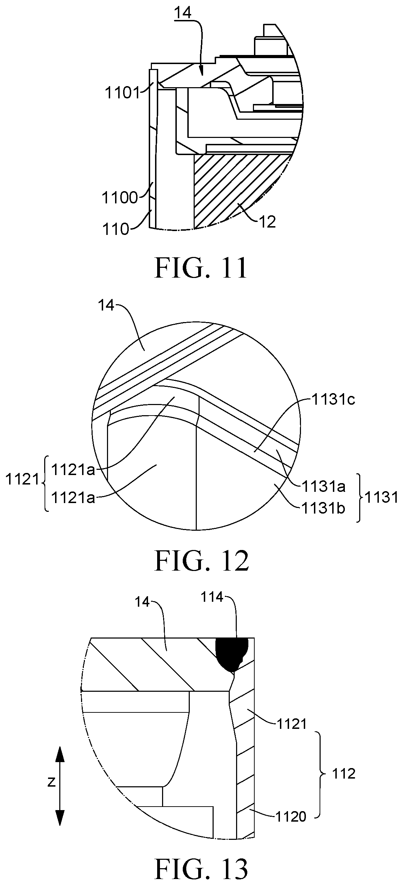

Some embodiments of the present application provide a battery cell 10. Referring to FIG. 4 to FIG. 11, FIG. 4 is an exploded view of a local structure of the battery cell 10 according to some embodiments of the present application. FIG. 5 is a front view of a battery cell 10 according to some embodiments of the present application. FIG. 6 is a cross-sectional view taken along the line A-A in FIG. 5. FIG. 7 is an enlarged view at a position B in FIG. 6. FIG. 8 is a cross-sectional view taken along the line C-C in FIG. 5. FIG. 9 is an enlarged view at a position D in FIG. 8. FIG. 10 is a schematic structural view of the interior of a battery cell 10 according to some embodiments of the present application. FIG. 11 is an enlarged view of position H in FIG. 10.

The battery cell 10 includes a case 11. An opening 11a is formed at an end of the case 11 along a first direction z. Along a circumference direction of the opening 11a, the case 11 includes a first wall 110, a corner area 112, and a second wall 113 which are connected in sequence. The first wall 110 has a first body portion 1100 and a first thickened portion 1101 arranged along the first direction z. The first body portion 1100 is farther away from the opening 11a than the first thickened portion 1101. A maximum thickness of the first thickened portion 1101 is greater than a thickness of the first body portion 1100. The corner area 112 has a second body portion 1120 and a second thickened portion 1121 arranged along the first direction z, and the second body portion 1120 is farther away from the opening 11a than the second thickened portion 1121. A maximum thickness of the second thickened portion 1121 is greater than a thickness of the second body portion 1120.

In some embodiments, the battery cell 10 may include a case 11 and an end cover 14. Along the first direction z, the case 11 has an opening 11a. An electrode assembly 12 is disposed inside the case 11, and the end cover 14 is connected to the case 11 to close the opening 11a, so that the electrode assembly 12 is in a closed space. In some embodiments, the end cover 14 may be provided with electrode terminals 13, and the electrode terminals 13 are connected to the tabs of the electrode assembly 12 to enable current output and input. In some embodiments, the end cover 14 may be provided with a filling port, and electrolyte may be injected into the case 11 through the filling port. In some embodiments, the end cover 14 may be riveted, welded, or threaded to the case 11.

In some embodiments, along the circumference direction of the opening 11a of the case 11, the case 11 may include a plurality of interconnected wall portions. For example, along the circumference direction of the opening 11a, the case 11 includes the first wall 110, the corner area 112, and the second wall 113 connected in sequence, where the first wall 110 is adjacent to the second wall 113, and the first wall 110 and the second wall 113 are connected through a transitional corner area 112. Exemplarily, when the case 11 is square or quasi-square, along a second direction x, the case 11 has two first walls 110 disposed opposite to each other, and along a third direction y, the case 11 has two second walls 113 disposed opposite to each other. The second direction x and the third direction y are perpendicular to each other, and the adjacent first wall 110 and second wall 113 are connected by a corresponding corner area 112. The first walls 110, the second walls 113, and the corner areas 112 together form the opening 11a. In some embodiments, a cross section of the corner area 112 may be arc-shaped, so that the first wall 110 and the second wall 113 transition in an arc shape. In some other embodiments, the cross-section of the corner area 112 may not be of an arc shape, but may be of a polygonal shape, so that the first wall 110 and the second wall 113 have a smooth transition.

In some embodiments, the first direction z may be parallel to a height direction of the battery cell 10. The second direction x may be a thickness direction of the battery cell 10. The third direction y may be a width direction of the battery cell 10.

In some embodiments, an area of an outer surface of the first wall 110 may be greater than an area of an outer surface of the second wall 113. In other embodiments, the area of the outer surface of the first wall 110 may be smaller than the area of the outer surface of the second wall 113. In some other embodiments, the area of the outer surface of the first wall 110 may be equal to the area of the outer surface of the second wall 113.

In some embodiments, the case 11 may be manufactured by a drawing forming process or the like. The drawing forming process may include a drawing procedure and a demolding procedure. Generally, the drawing procedure refers to: in a drawing station, a metal sheet is drawn and deformed. During the drawing process, parameters such as stress, a speed, and time need to be controlled to avoid problems such as breakage of the metal sheet or uneven stress. A tensile force is usually applied by hydraulic or mechanical actuation. Generally, the demolding process is also referred to elastic demolding, which can refer to: after the drawing is complete, a finished product is demolded. Pneumatic demolding or mechanical demolding is usually used.

"The first wall 110 has a first body portion 1100 and a first thickened portion 1101 arranged along a first direction z, and the first body portion 1100 is farther away from the opening 11a than the first thickened portion 1101" can be understood as, in the first direction z, the first body portion 1100 and the first thickened portion 1101 are arranged relative to each other, and the first body portion 1100 is farther away from the opening 11a than the first thickened portion 1101.

Exemplarily, one possibility is that along the first direction z, the first body portion 1100 and the first thickened portion 1101 are connected in sequence. An end of the first thickened portion 1101 away from the first body portion 1100 forms the opening 11a, and the first thickened portion 1101 is connected to the end cover. Alternatively, another possibility is that the first wall 110 further includes a first connecting section, the first connecting section, the first thickened portion 1101, and the first body portion 1100 are distributed in sequence along the first direction z. An end of the first connecting section forms an opening 11a portion, the first connecting section may be connected to the end cover 14, and a thickness of the first connecting section can be greater than, equal to, or less than the maximum thickness of the first thickened portion 1101.

"A maximum thickness of the first thickened portion 1101 is greater than a thickness of the first body portion 1100" can be understood as that the maximum thickness of the first thickened portion 1101 is greater than the thickness of the first body portion 1100, and can also be understood as that the strength of the first thickened portion 1101 is greater than the strength of the first body. In some embodiments, the first thickened portion 1101 is of a structure having a same wall thickness, and the wall thickness may be greater than the thickness of the first body portion 1100. In some other embodiments, the first thickened portion 1101 may not be of the structure having a same wall thickness, and a wall thickness of a portion having a largest wall thickness is greater than the maximum wall thickness of the first body portion 1100. In some embodiments, the first thickened portion 1101 is connected to the first body portion 1100, and a wall thickness of a boundary portion between the first thickened portion 1101 and the first body portion 1100 may gradually increase to allow a smooth transition between the first thickened portion 1101 and the first body portion 1100.

In some embodiments, the first thickened portion 1101 protrudes from an inner side of the first body portion 1100, that is, a portion of the first thickened portion 1101 protruding from the first body portion 1100 may be inside the case 11. In some other embodiments, the first thickened portion 1101 protrudes from the outside of the first body portion 1100, that is, the portion of the first thickened portion 1101 protruding from the first body portion 1100 may be outside the case 11. In some other embodiments, the first thickened portion 1101 may protrude from the outside and the inside of the first body portion 1100, that is, a portion of the first thickened portion 1101 protruding from the first body portion 1100 may be outside the case 11, and a portion may be inside the case 11.

In some embodiments, the first body portion 1100 may be of the structure having a same wall thickness. In some other embodiments, the wall thickness of the first body portion 1100 may be unevenly distributed, and the first body portion 1100 may be of a structure having different wall thicknesses.

"The corner area 112 has a second body portion 1120 and a second thickened portion 1121 arranged along the first direction z, and the second body portion 1120 is farther away from the opening 11a than the second thickened portion 1121" can be understood as, in the first direction z, the second body portion 1120 and the second thickened portion 1121 are arranged relative to each other, and the second body portion 1120 is farther away from the opening 11a than the second thickened portion 1121.

Exemplarily, one possibility is that along the first direction z, the second body portion 1120 and the second thickened portion 1121 are connected in sequence, an end of the second thickened portion 1121 away from the second body portion 1120 forms the opening 11a, and the second thickened portion 1121 is connected to the end cover. Alternatively, another possibility is that the corner area 112 also includes a second connecting section. The second connecting section, the second body portion 1120, and the second thickness portion are distributed in sequence along the first direction z, an end of the second connecting section forms an opening 11a portion, and the second connecting section may be connected to the end cover.

"A maximum thickness of the second thickened portion 1121 is greater than a thickness of the second body portion 1120" can be understood as that the maximum thickness of the second thickened portion 1121 is greater than the thickness of the second body portion 1120, or that the strength of the second thickened portion 1121 is greater than the strength of the second body. In some embodiments, the second thickened portion 1121 is of a structure having a same wall thickness, and the wall thickness may be greater than the thickness of the second body portion 1120. In some other embodiments, the second thickened portion 1121 may not be the structure having a same wall thickness, and a wall thickness of a portion with a largest wall thickness is greater than the maximum wall thickness of the second body portion 1120. In some embodiments, the second thickened portion 1121 is connected to the second body portion 1120, and a wall thickness of a boundary portion between the second thickened portion 1121 and the second body portion 1120 may gradually increase to allow a smooth transition between the second thickened portion 1121 and the second body portion 1120.

In some embodiments, the second body portion 1120 may be of the structure having a same wall thickness. In some other embodiments, the wall thickness of the second body portion 1120 may be unevenly distributed, and the second body portion 1120 may be of a structure having different wall thicknesses.

In some embodiments, the second thickened portion 1121 protrudes from an inner side of the second body portion 1120, that is, a portion of the second thickened portion 1121 protruding from the second body portion 1120 may be inside the case 11. In some other embodiments, the second thickened portion 1121 protrudes from an outer side of the second body portion 1120, that is, the portion of the second thickened portion 1121 protruding from the second body portion 1120 may be outside the case 11. In some other embodiments, the second thickened portion 1121 may protrude from the outside and inside of the second body portion 1120, that is, a portion of the second thickened portion 1121 protruding from the second body portion 1120 may be outside the case 11, and a portion may be inside the case 11.

In some embodiments, a relationship between the maximum thickness of the first thickened portion 1101 and the maximum thickness of the second thickened portion 1121 is not limited, and a possible solution includes: the maximum thickness of the first thickened portion 1101 is less than the maximum thickness of the second thickened portion 1121; or the maximum thickness of the first thickened portion 1101 is greater than the maximum thickness of the second thickened portion 1121; or the maximum thickness of the first thickened portion 1101 is equal to the maximum thickness of the second thickened portion 1121.

In the above solution, by providing the first thickened portion 1101 with a larger maximum thickness on the first wall 110, a problem of forming a heat-affected zone with lower strength in the case 11 due to welding and therefore resulting in cracking due to insufficient strength when the first wall 110 is impacted can be alleviated, so that the battery 100 is more reliable. Moreover, by providing the second thickened portion 1121 with a larger maximum thickness in the corner area 112, the strength of a portion, corresponding to the opening 11a, of the corner area 112 can be improved, and a problem of cracking in the corner area 112 due to stress concentration caused by providing the first thickened portion 1101 on the portion, corresponding to the opening 11a, of the corner area 112 when the case 11 is being demolded is alleviated, so that the battery cell 10 is more reliable.

According to some embodiments of the present application, the maximum thickness of the second thickened portion 1121 is greater than the maximum thickness of the first thickened portion 1101.

"A maximum thickness of the second thickened portion 1121 is greater than a maximum thickness of the first thickened portion 1101" can be understood as that a maximum thickness of a thickened portion of the corner area 112 is greater than a maximum thickness of a thickened portion of the first wall 110, and can also be understood as that the strength of the second thickened portion 1121 is greater than the strength of the first thickened portion 1101.

In some embodiments, a minimum thickness of the second thickened portion 1121 may be greater than the maximum thickness of the first thickened portion 1101. In some other embodiments, the minimum thickness of the second thickened portion 1121 may be less than or equal to the maximum thickness of the first thickened portion 1101. In some other embodiments, the minimum thickness of the second thickened portion 1121 may be less than or a minimum thickness of the first thickened portion 1101.

In the above solution, by setting the maximum thickness of the second thickened portion 1121 to be greater than the maximum thickness of the first thickened portion 1101, the strength of the portion, corresponding to the opening 11a, of the corner area 112 can be effectively improved. For one thing, an overall thickness of the case 11 can be effectively increased to reduce the risk of cracking of the case 11 due to impact. For another, the stress concentration during the manufacturing process of the case 11, which causes the problem of cracking in the corner area 112, can be effectively ameliorated, so that the battery cell 10 is more reliable.

In some other embodiments, the maximum thickness of the second thickened portion 1121 may be less than the maximum thickness of the first thickened portion 1101. In some other embodiments, the maximum thickness of the second thickened portion 1121 may be less than the minimum thickness of the first thickened portion 1101.

According to some embodiments of the present application, reference may be made to FIG. 7 and FIG. 9. The maximum thickness of the second thickened portion 1121 is T1, the thickness of the second body portion 1120 is T2, the maximum thickness of the first thickened portion 1101 is t1, the thickness of the first body portion 1100 is t2, and E ≥ F, E = (T1-T2)/T2, and F = (t1-t2)/t2 are satisfied.

In some embodiments, the corner area 112 of the case 11 can be regarded as a portion that is locally thickened based on the second body portion 1120 to form the second thickened portion 1121, T1-T2 is a difference between the maximum thickness of the second thickened portion 1121 and the thickness of the second body portion 1120, and E is the difference between the maximum thickness of the second thickened portion 1121 and the thickness of the second body portion 1120 divided by the thickness of the second body portion 1120, that is, E can be regarded as a degree of thickening of the second thickened portion 1121 compared to the second body portion 1120.

In some embodiments, the first wall 110 of the case 11 can be regarded as a portion that is locally thickened based on the first body portion 1100 to form the first thickened portion 1101, t1-t2 is a difference between the maximum thickness of the first thickened portion 1101 and the thickness of the first body portion 1100, and F is the difference between the maximum thickness of the first thickened portion 1101 and the thickness of the first body portion 1100 divided by the thickness of the first body portion 1100, that is, F can be regarded as a degree of thickening of the first thickened portion 1101 compared to the first body portion 1100.

"E ≥ F" can be understood as that the degree of thickening of the second thickened portion 1121 compared to the second portion is greater than or equal to the degree of thickening of the first thickened portion 1101 compared to the first body portion 1100.

In the above solution, by limiting the degree E of thickening of the second thickened portion 1121 compared to the second body portion 1120 to be no less than the degree of thickening F of the first thickened portion 1101 compared to the first body portion 1100, the problem of cracking in the corner area 112 due to stress concentration caused by providing the first thickened portion 1101 in a manufacturing process of the case 11 can be effectively ameliorated, so that the battery cell 10 is more reliable.

In some other embodiments, the degree of thickening of the second thickened portion 1121 compared to the second portion is smaller than the degree of thickening of the first thickened portion 1101 compared to the first body portion 1100.

According to some embodiments of the present application, the maximum thickness of the second thickened portion 1121 is T1, and the thickness of the second body portion 1120 is T2, satisfying 0 < E < 30%, where E = (T1-T2)/T2.

In some embodiments, the corner area 112 of the case 11 can be regarded as a portion that is locally thickened based on the second body portion 1120 to form the second thickened portion 1121, T1-T2 is the difference between the maximum thickness of the second thickened portion 1121 and the thickness of the second body portion 1120, and E is the difference between the maximum thickness of the second thickened portion 1121 and the thickness of the second body portion 1120 divided by the thickness of the second body portion 1120, that is, E can be regarded as the degree of thickening of the second thickened portion 1121 compared to the second body portion 1120.

In some embodiments, the value of E may satisfy a value greater than 0 and less than 30%. Exemplarily, E may take the following values: 1%, 2%, 3%, 4%, ...,28%, 29%, and any value between two adjacent values thereof or any value between 29% and 30%.

In some embodiments, T2 may be 0.6 mm. T1 may be a value greater than 0.6 mm, for example, T1 may be 0.65%, 0.7%, or 0.75%, and the corresponding values of E are 8.3%, 16.7%, and 25%, respectively.

In the above solution, by limiting the degree E of thickening of the second thickened portion 1121 compared to the second body portion 1120, the strength of the corner area 112 can be improved, and the risk of cracking of the corner area 112 due to stress concentration can be reduced. In addition, the risk of bulging the corner area 112 and deforming a shell due to excessive stress is reduced, so that the battery cell 10 is more reliable.

According to some embodiments of the present application, 0 < E ≤ 16.7% is satisfied.

In some embodiments, the value of E may satisfy a value greater than 0 and less than or equal to 16.7%. Exemplarily, E may take the following values: 1%, 2%, 3%, 4%...16%, 16.7%, or any value between two adjacent values.

In the above solution, by limiting the degree E of thickeningof the second thickened portion 1121 relative to the second body portion 1120 to be no more than 16.7%, the problem of cracking caused by stress concentration and deformation caused by excessive stress can be solved. In addition, a weight of the case 11 can be effectively controlled, which is beneficial to the improvement of a weight energy density of the battery cell 10.

According to some embodiments of the present application, along the first direction z, a distance from an end, located away from the opening 11a, of the second thickened portion 1121 to the opening 11a is L1, and 0 < L1 ≤ 20 mm is satisfied.

In some embodiments, the value of L1 can be a number greater than 0 mm and less than or equal to 20 mm. Exemplarily, the value of L1 can be 1 mm, 2 mm, 3 mm, 4 mm, ..., 15 mm, 16 mm, 17 mm, 18 mm, 19 mm, 20 mm, or any number between two adjacent numbers, or any number between 0 mm and 1 mm.

In some embodiments, the first direction z can be regarded as an up-down direction, and "a distance from an end, located away from the opening 11a, of the second thickened portion 1121 to the opening 11a is L1" can be understood as that the second body portion 1120 is L1 below the opening, and the second thickened portion 1121 is above the second body portion 1120, or it can be understood that along the first direction z, a boundary can be defined at a distance from the opening 11a, the second thickened portion 1121 is above the boundary, and the second body portion 1120 is below the boundary.

In the above solution, along the first direction z, by providing the second thickened portion 1121 in the corner area 112 within 20 mm below the opening 11a, the strength of the portion of the corner area 112 corresponding to the opening 11a can be effectively improved, and the risk of cracking in the corner area 112 due to stress concentration caused by thickening the first wall 110 on the portion of the corner area 112 corresponding to the opening 11a during the manufacturing process of the case 11 is reduced, so that the battery cell 10 is more reliable.

According to some embodiments of the present application, along the first direction z, a distance from an end, located away from the opening 11a, of the first thickened portion 1101 to the opening 11a is L2, and 0 < L2 ≤ 20 mm is satisfied.

In some embodiments, the value of L1 can be a number greater than 0 mm and less than or equal to 20 mm. Exemplarily, the value of L1 can be 1 mm, 2 mm, 3 mm, 4 mm, ..., 15 mm, 16 mm, 17 mm, 18 mm, 19 mm, 20 mm, or any number between two adjacent numbers, or any number between 0 mm and 1 mm.

In some embodiments, the first direction z can be regarded as an up-down direction, and "a distance from an end, located away from the opening 11a, of the first thickened portion 1101 to the opening 11a is L2" can be understood as that the first body portion 1100 is L2 below the opening, and the first thickened portion 1101 is above the first body portion 1100, or it can be understood that along the first direction z, a boundary can be defined at a distance from the opening 11a, the first thickened portion 1101 is above the boundary, and the first body portion 1100 is below the boundary.

In the above solution, along the first direction z, by providing the second thickened portion 1121 in the corner area 112 within 20 mm below the opening 11a, the strength of the portion of the corner area 112 corresponding to the opening 11a can be effectively improved, and the risk of cracking in the corner area 112 due to stress concentration caused by thickening the first wall 110 on the portion of the corner area 112 corresponding to the opening 11a during the manufacturing process of the case 11 is reduced, so that the battery cell 10 is more reliable.

According to some embodiments of the present application, an area of an outer surface of the first wall 110 is greater than an area of an outer surface of the second wall 113.

In some embodiments, the outer surface of the first wall 110 may be a larger surface of the battery cell 10. When the battery cell 10 is charged or discharged, an expansion force generated inside the battery cell mainly acts on the first wall 110.

In the above solution, by providing the first thickened portion 1101 on the first wall 110 with a larger outer surface area, the risk of the case 11 being easily cracked due to impact can be effectively ameliorated, so that the battery cell 10 is more reliable.

In some other embodiments of the present application, the area of the outer surface of the first wall 110 is equal to the area of the outer surface of the second wall 113. Alternatively, the area of the outer surface of the first wall 110 is smaller than the area of the outer surface of the second wall 113.

According to some embodiments of the present application, referring to FIG. 4, along the second direction x, the case 11 includes two first walls 110 disposed opposite to each other, and along the third direction y, the case 11 includes two second walls 113 disposed opposite to each other, and the second direction x, the third direction y, and the first direction z are perpendicular to one another. The adjacent first walls 110 and second walls 113 are connected through corresponding corner areas 112, and the first walls 110, the second walls 113, and the corner areas 112 together form an opening 11a.

In some embodiments, the case 11 may be of a cuboid-like shape, and its body includes two opposite first walls 110 and two opposite second walls 113, and the first wall 110 is adjacent to the second wall 113. The adjacent first walls 110 and the second walls 113 are connected through a transitional corner area 112. In some embodiments, the corner area 112 may be an arc-shaped portion.

In the above solution, the case 11 may be of a square structure. By thickening the two wall portions that are disposed opposite to each other along the second direction x, that is, providing the first thickened portion 1101, the structural strength of the case 11 can be effectively improved, and the risk of the case 11 being cracked due to impact can be reduced. Moreover, by thickening the corner area 112 between two adjacent wall portions, that is, providing the second thickened portion 1121, the problem of cracking of the corner area 112 due to stress concentration can be ameliorated, so that the battery cell 10 is more reliable.

According to some embodiments of the present application, referring to FIG. 5 to FIG. 9, the second wall 113 has a third body portion 1130 and a third thickened portion 1131 arranged along the first direction z, the third body portion 1130 is farther away from the opening 11a than the third thickened portion 1131, and a maximum thickness of the third thickened portion 1131 is greater than a thickness of the third body portion 1130.

"The second wall 113 has a third body portion 1130 and a third thickened portion 1131 arranged along the first direction z, and the third body portion 1130 is farther away from the opening 11a than the third thickened portion 1131" can be understood as that, in the first direction z, the third body portion 1130 and the third thickened portion 1131 are arranged relative to each other, and the third body portion 1130 is farther away from the opening 11a than the third thickened portion 1131.

Exemplarily, one possibility is that along the first direction z, the third body portion 1130 and the third thickened portion 1131 are connected in sequence, an end of the third thickened portion 1131 away from the third body portion 1130 forms the opening 11a, and the third thickened portion 1131 is connected to the end cover. Alternatively, another possibility is that the second wall 113 further includes a third connecting section, the third connecting section, the third body portion 1130 and the third thickness portion are distributed in sequence along the first direction z, an end of the third connecting section forms a portion of the opening 11a, and the third connecting section may be connected to the end cover 14.

"A maximum thickness of the third thickened portion 1131 is greater than a thickness of the third body portion 1130" can be understood as that the maximum thickness of the third thickened portion 1131 is greater than the thickness of the third body portion 1130, or that the strength of the third thickened portion 1131 is greater than the strength of the third body. In some embodiments, the third thickened portion 1131 is of a structure having a same wall thickness, and the wall thickness may be greater than the thickness of the third body portion 1130. In some other embodiments, the third thickened portion 1131 may not be of the structure having a same wall thickness, and a wall thickness of the position with a largest wall thickness is greater than the maximum wall thickness of the third body portion 1130. In some embodiments, the third thickened portion 1131 is connected to the third body portion 1130, and a wall thickness of a boundary portion between the third thickened portion 1131 and the third body portion 1130 can gradually increase to allow a smooth transition between the third thickened portion 1131 and the third body portion 1130.

In some embodiments, the third thickened portion 1131 protrudes from an inner side of the third body portion 1130, that is, the portion of the third thickened portion 1131 protruding from the third body portion 1130 may be inside the case 11. In some other embodiments, the third thickened portion 1131 protrudes from the outside of the third body portion 1130, that is, the portion of the third thickened portion 1131 protruding from the third body portion 1130 may be outside the case 11. In some other embodiments, the third thickened portion 1131 may protrude from the outside and inside of the third body portion 1130, that is, a portion of the third thickened portion 1131 protruding from the third body portion 1130 may be outside the case 11, and a portion may be inside the case 11.

In some embodiments, the third body portion 1130 may be of a structure having a same wall thickness. In some other embodiments, the wall thickness of the third body portion 1130 may be unevenly distributed, and may be of a structure having different wall thicknesses.

According to some embodiments of the present application, the maximum thickness of the second thickened portion 1121 is greater than the maximum thickness of the third thickened portion 1131.

"The maximum thickness of the second thickened portion 1121 is greater than the maximum thickness of the third thickened portion 1131" can be understood as that the maximum thickness of the thickened portion of the corner area 112 is greater than the maximum thickness of the thickened portion of the second wall 113, and can also be understood as that the strength of the second thickened portion 1121 is greater than the strength of the third thickened portion 1131.

In some embodiments, a minimum thickness of the second thickened portion 1121 may be greater than the maximum thickness of the third thickened portion 1131. In other embodiments, the minimum thickness of the second thickened portion 1121 may be less than or equal to the maximum thickness of the third thickened portion 1131. In other embodiments, the minimum thickness of the second thickened portion 1121 may be less than a minimum thickness of the third thickened portion 1131.

In the above solution, by setting the maximum thickness of the second thickened portion 1121 to be greater than the maximum thickness of the third thickened portion 1131, the strength of the portion, corresponding to the opening 11a, of the corner area 112 can be effectively improved. For one thing, an overall thickness of the case 11 can be effectively increased to reduce the risk of cracking of the case 11 due to impact. For another, the stress concentration in the corner area 112 during the manufacturing process of the case 11, which causes the problem of cracking in the corner area 112, can be effectively ameliorated, so that the battery cell 10 is more reliable.

In some other embodiments, the maximum thickness of the second thickened portion 1121 may be less than the maximum thickness of the third thickened portion 1131. In some other embodiments, the maximum thickness of the second thickened portion 1121 may be less than the minimum thickness of the third thickened portion 1131.

According to some embodiments of the present application, referring to FIG. 7 and FIG. 9, the maximum thickness of the second thickened portion 1121 is T1, the thickness of the second body portion 1120 is T2, the maximum thickness of the third thickened portion 1131 is t3, the thickness of the third body portion 1130 is t4, and E ≥ G, E = (T1-T2)/T2, and G = (t3-t4)/t4 are satisfied.

In some embodiments, the corner area 112 of the case 11 can be regarded as a portion that is locally thickened based on the second body portion 1120 to form the second thickened portion 1121, T1-T2 is a difference between the maximum thickness of the second thickened portion 1121 and the thickness of the second body portion 1120, and E is the difference between the maximum thickness of the second thickened portion 1121 and the thickness of the second body portion 1120 divided by the thickness of the second body portion 1120, that is, E can be regarded as a degree of thickening of the second thickened portion 1121 compared to the second body portion 1120.

In some embodiments, the second wall 113 of the case 11 can be regarded as a portion that is locally thickened based on the third body portion 1130 to form the third thickened portion 1131, t3-t4 is a difference between the maximum thickness of the third thickened portion 1131 and the thickness of the third body portion 1130, and G is the difference between the maximum thickness of the third thickened portion 1131 and the thickness of the third body portion 1130 divided by the thickness of the third body portion 1130, that is, G can be regarded as a degree of thickening of the third thickened portion 1131 compared to the third body portion 1130.

"E ≥ G" can be understood as that the degree of thickening of the second thickened portion 1121 compared to the second body portion 1120 is greater than or equal to the degree of thickening of the third thickened portion 1131 compared to the third body portion 1130.

In the above solution, by limiting the degree E of thickening of the second thickened portion 1121 compared to the second body portion 1120 to be no less than the degree G of thickening of the third thickened portion 1131 compared to the third body portion 1130, the problem of cracking in the corner area 112 due to stress concentration on the portion, corresponding to the opening 11a, of the corner area caused by providing the third thickened portion 1131 in a manufacturing process of the case 11 can be effectively ameliorated, so that the battery cell 10 is more reliable.

In some other embodiments, the degree of thickening of the second thickened portion 1121 compared to the second body portion 1120 is less than the degree of thickening of the third thickened portion 1131 compared to the third body portion 1130.

According to some embodiments of the present application, referring to FIG. 4, along the first direction z, a distance from one end of the third thickened portion 1131 away from the opening 11a to the opening 11a is L3, satisfying 0 < L3 ≤ 20 mm.

In some embodiments, the value of L3 can be a number greater than 0 and less than or equal to 20 mm. Exemplarily, the value of L3 can be 1 mm, 2 mm, 3 mm, 4 mm, ..., 15 mm, 16 mm, 17 mm, 18 mm, 19 mm, 20 mm, or any number between two adjacent numbers, or any number between 0 mm and 1 mm.

In some embodiments, the first direction z can be regarded as an up-down direction, and "the distance from the end, located away from the opening 11a, of the third thickened portion 1131 to the opening 11a is L3" can be understood as, the third body portion 1130 is L3 below the opening, and the third thickened portion 1131 is above the third body portion 1130, or it can be understood that along the first direction z, a boundary can be defined at a distance from the opening 11a, the third thickened portion 1131 is above the boundary, and the third body portion 1130 is below the boundary.

In the above solution, along the first direction z, by providing the third thickened portion 1131 in the area of the second wall 113 within 20 mm below the opening 11a, the strength of the second wall 113 corresponding to the opening 11a can be effectively improved, reducing the risk of the second wall 113 being easily cracked due to impact, so that the battery cell 10 is more reliable.

In some embodiments, the second wall 113 is of a structure having a same wall thickness.

"The second wall 113 is of a structure having a same wall thickness" can be understood as that a wall thickness of any portion of the second wall 113 is equal along the first direction z, and can also be understood as that the present application provides a battery cell 10, where the first wall 110 and the corner area 112 of the battery cell 10 are locally provided with thickened portions, while the second wall 113 is not provided with a thickened portion. Alternatively, it can be understood that the present application provides a battery cell 10, where the first wall 110 and the corner area 112 of the battery cell 10 are locally provided with thickened portions, and the second wall 113 is thickened as a whole.

In the above solution, under the condition that the first thickened portion 1101 is provided in the first wall 110 and the second thickened portion 1121 is provided in the corner area 112, the second wall 113 is disposed to be of the structure having a same wall thickness. For one thing, it can ensure the strength of the case 11 to a certain extent and reduce the risk of cracking of the case 11. For another, it can effectively control the weight of the case 11 and reduce the influence of the thickening of the wall on the weight energy density of the battery cell 10.

According to some embodiments of the present application, referring to FIG. 4 and FIG. 12, FIG. 12 is an enlarged view of position L in FIG. 4.

The battery cell 10 further includes an end cover 14, the end cover 14 closing the opening 11a. The third thickened portion 1131 includes a first section 1131a and a second section 1131b which are connected to each other. The first section 1131a, the second section 1131b, and the third body portion 1130 (reference is to be made to FIG. 9) are distributed in sequence along the first direction z. A maximum thickness of the second section 1131b is greater than the thickness of the third body portion 1130. A maximum thickness of the second section 1131b is greater than the maximum thickness of the first section 1131a. The end cover 14 is connected to the first section 1131a.

In some embodiments, along the first direction z, the third thickened portion 1131 may include a multi-section structure. Exemplarily, along the first direction z, the third thickened portion 1131 includes a first section 1131a and a second section 1131b connected to each other, and the first section 1131a is connected to the end cover 14. The connection between the first section 1131a and the end cover 14 may include welding. The second section 1131b is connected to the third body portion 1130. The maximum thickness of the second section 1131b may be the maximum thickness of the third thickened portion 1131, that is, the maximum thickness of the second wall 113.

In some embodiments, the maximum thickness of the first section 1131a may be smaller than the maximum thickness of the second section 1131b, and the maximum thickness of the first section 1131a may be greater than, equal to, or less than the thickness of the third body portion 1130. Alternatively, the minimum thickness of the first section 1131a may be greater than, equal to, or less than the thickness of the third body portion 1130.

In the above solution, by setting the thickness of the second section 1131b of the third thickened portion 1131 to be greater than the thickness of the third body portion 1130, the strength of the second wall 113 can be effectively improved, and the risk of cracking of the second wall 113 due to impact can be reduced, so that the battery cell 10 is more reliable.

According to some embodiments of the present application, as shown in FIG. 4 and FIG. 12, a first step surface 1131c is formed between the second section 1131b and the first section 1131a, and the end cover 14 is lapped on the first step surface 1131c.

In some embodiments, the maximum thickness of the second section 1131b is greater than the maximum thickness of the first section 1131a, in this case, a first step surface 1131c is formed between the second section 1131b and the first section 1131a. In some embodiments, the first step surface 1131c may be inclined or perpendicular to the first direction z. The first step surface 1131c being inclined to the first direction z can be understood as forming an angle between the first step surface 1131c and the first direction z, and the angle is not 90°. "The end cover 14 is lapped on the first step surface 1131c" can be understood as that the first step surface 1131c can support the end cover 14 and when the end cover 14 is assembled, the first step surface 1131c can locate the end cover 14.

In the above solution, the first step surface 1131c formed between the second section 1131b and the first section 1131a enables the end cover 14 to lap the first step surface 1131c, thereby facilitating the positioning and assembly of the end cover 14. Moreover, the first step surface 1131c supports the end cover 14, reducing the risk of the end cover 14 collapsing, so that the battery cell 10 is more reliable.

According to some embodiments of the present application, the battery cell 10 further includes an end cover 14, the end cover 14 closing the opening 11a. The second thickened portion 1121 includes a third section 1121a and a fourth section 1121b which are connected to each other. The third section 1121a, the fourth section 1121b and the second body portion 1120 are distributed in sequence along the first direction z. A maximum thickness of the fourth section 1121b is greater than the thickness of the second body portion 1120. A maximum thickness of the fourth section 1121b is greater than the maximum thickness of the third section 1121a. The end cover 14 is connected to the third section 1121a.

In some embodiments, along the first direction z, the second thickened portion 1121 may include a multi-section structure. Exemplarily, along the first direction z, the second thickened portion 1121 includes a third section 1121a and a fourth section 1121b connected to each other, and the third section 1121a is connected to the end cover 14. The connection between the third section 1121a and the end cover 14 may include welding. The fourth section 1121b is connected to the second body portion 1120. The maximum thickness of the fourth section 1121b may be the maximum thickness of the second thickened portion 1121, that is, the maximum thickness of the corner area 112.

In some embodiments, the maximum thickness of the third section 1121a may be smaller than the maximum thickness of the fourth section 1121b, and the maximum thickness of the third section 1121a may be greater than, equal to, or less than the thickness of the second body portion 1120. Alternatively, a minimum thickness of the third section 1121a may be greater than, equal to, or less than the thickness of the second body portion 1120.

In the above solution, by setting the thickness of the fourth section 1121b of the second thickened portion 1121 to be greater than the thickness of the second body portion 1120, the strength of the corner area can be effectively improved, reducing the risk of cracking in the corner area due to impact or stress concentration during demolding, so that the battery cell 10 is more reliable.

According to some embodiments of the present application, a second step surface 1121c is formed between the fourth section 1121b and the third section 1121c, and the end cover 14 is lapped on the second step surface 1121c.

In some embodiments, the maximum thickness of the fourth section 1121b is greater than the maximum thickness of the third section 1121c, so a second step surface 1121c is formed between the fourth section 1121b and the third section 1121c. In some embodiments, the second step surface 1121c may be inclined or perpendicular to the first direction z. The second step surface 1121c being inclined to the first direction z can be understood as forming an angle between the second step surface 1121c and the first direction z, and the angle being not 90°.

"The end cover 14 is lapped on the second step surface 1121c" can be understood as that the second step surface 1121c can support the end cover 14 and when the end cover 14 is assembled, the second step surface 1121c can locate the end cover 14.

In the above solution, the second step surface 1121c formed between the fourth section 1121b and the third section 1121c enables the end cover 14 to lap the second step surface 1121c, thereby facilitating the positioning and assembly of the end cover 14. Moreover, the second step surface 1121c supports the end cover 14, which can reduce the risk of the end cover 14 collapsing, so that the battery cell 10 is more reliable.

According to some embodiments of the present application, referring to FIG. 13, FIG. 13 is a schematic diagram of the end cover and the corner area according to some embodiments of the present application.

The battery cell 10 also includes an end cover 14, the end cover 14 is welded to the second thickened portion 1121 to form a fusion zone 114. An average grain size of the second thickened portion 1121 other than the fusion zone 114 is greater than an average grain size of the second body portion 1120, and the average grain size is an average grain size of grains in the first direction z.

The fusion zone 114 is a zone formed by welding the second thickened portion 1121 and the end cover 14. In some embodiments, the fusion zone 114 may be referred to as a fusion area, a weld mark, etc.

"The portion of the second thickened portion 1121 other than the fusion zone 114" may be understood as a portion of the second thickened portion that is not connected to the end cover 14, that is, a portion of the second thickened portion 1121 that is not the fusion zone 114.

In some embodiments, a test method for an average grain size is based on the standard reference: GB/T 6394-2017 "Determination of estimating the average grain size of metal" and GB/T 13298-2017 "Method for determination of grain size of metallic materials by electron microscopy".

In the above solution, by limiting the average grain size of the second thickened portion 1121 other than the fusion zone 114 to be larger than the average grain size of the second body portion 1120, it is beneficial to the improvement of the strength of the second thickened portion 1121, so that the corner area 112 has a higher strength, and reducing the risk of cracking of the corner area 112 near the fusion zone 114 due to impact and the risk of the corner area 112 being cracked due to stress concentration during demolding, so that the battery cell 10 is more reliable.

In some other embodiments, the end cover 14 is welded to the first thickened portion 1101 to form a fusion zone, and the average grain size of the first thickened portion 1101 other than the fusion zone is larger than the average grain size of the first body portion 1100, and the average grain size is the average grain size of the grains in the first direction z. In other embodiments, the end cover 14 is welded to the third thickened portion 1131 to form a fusion zone, and the average grain size of the third thickened portion 1131 other than the fusion zone is larger than the average grain size of the third body portion 1130, and the average grain size is the average grain size of the grains in the first direction z.

According to some embodiments of the present application, in a cross section of the corner area 112 parallel to the first direction z, the number of grains in a portion of the second thickened portion 1121 below the fusion zone 114 is greater than or equal to 15 in the width direction of the cross section.

In some embodiments, the "the width direction of the cross section" may be the thickness direction of the corner area 112.

In some embodiments, "the portion of the second thickened portion 1121 below the fusion zone 114, in the width direction of the cross-section, has a grain number greater than or equal to 15" can be understood as that in the thickness direction of the corner area 112, the number of grains in the portion of the second thickened portion 1121 between the fusion zone 114 and the second body portion 1120can be 15, 16, 17 or more.

In the above solution, in the width direction of the cross section, the number of grains is greater than or equal to 15, which is beneficial to the improvement of the strength of the second thickened portion 1121, improving the reliability of the battery 100.

In some other embodiments, in a cross section of the first wall 110 parallel to the first direction z, the number of grains in a portion of the first thickened portion 1101 below the fusion zone 114 is greater than or equal to 15 in the width direction of the cross section. In some other embodiments, in a cross section of the second wall 113 parallel to the first direction z, the number of grains in a portion of the third thickened portion 1131 below the fusion zone 114 is greater than or equal to 15 in the width direction of the cross section.

According to some embodiments of the present application, an average grain size of a portion of the second thickened portion 1121 other than the fusion zone 114 is in a range of 70 micrometers to 1200 micrometers; and/or

in some embodiments, the average grain size of the second body portion 1120 is in a range of 30 micrometers to 1000 micrometers; and/or in some embodiments, the maximum wall thickness of the end cover 14 is 0.25 mm to 3 mm.

In some embodiments, the average grain size of the second thickened portion 1121 other than the fusion zone 114 may be, but is not limited to, 70 µm, 80 µm, 90 µm, 100 µm, 200 µm, 300 µm, 400 µm, 500 µm, 600 µm, 700 µm, 800 µm, 900 µm, 1000 µm, 1100 µm, 1200 µm, etc., or any value between adjacent values.

In some embodiments, the average grain size of the second body portion 1120 may be but is not limited to 30 µm, 40 µm, 50 µm, 60 µm, 70 µm, 80 µm, 90 µm, 100 µm, 200 µm, 300 µm, 400 µm, 500 µm, 600 µm, 700 µm, 800 µm, 900 µm, 1000 µm, etc., or any value between adjacent values.

In some embodiments, for the test scheme for average grain size reference can be made to: GB/T 6394-2002 "Metal-methods for estimating the average grain size" and GB/T 13298-2017 "Method for determination of grain size of metallic materials by electron microscopy".

In some embodiments, the maximum wall thickness of the end cover 14 may be but is not limited to 0.25 mm, 0.35 mm, 0.45 mm, 0.55 mm, 0.65 mm, 0.75 mm, 0.85 mm, ..., 2.75 mm, 2.85 mm, 2.95 mm, 3 mm, etc., or any value between adjacent values.

In the above solution, the average grain size of the second thickened portion 1121 and/or the average grain size of the second body portion 1120 satisfies the above relationship, which is beneficial to the improvement of the strength of the second thickened portion 1121, so that the battery cell 10 is more reliable.

According to some embodiments of the present application, the present application further provides a battery 100, and the battery 100 includes the battery cell 10 described above.

In some embodiments, the battery 100 includes a battery cell 10 and a box 20, and the battery cell 10 is accommodated in the box 20. The box 20 is configured to provide an accommodating space for the battery cells 10. In the battery 100, there may be one or more battery cells 10, and each battery cell 10 may be fixed to the box 20 by a connector (such as a bolt), or each battery cell 10 may be fixed to the box 20 by bonding.

According to some embodiments of the present application, the present application further provides an energy storage device, which includes the battery cell 10 described above.

The energy storage device may include an energy storage cabinet, which includes a cabinet and one or more battery cells 10 or one or more batteries 100 disposed in the cabinet. The cabinet may include a cabinet body and a cabinet door. One or more battery cells 10 are disposed in the cabinet body. The cabinet door closes the opening 11a of the cabinet body such that one or more battery cells 10 are in a closed space, reducing the interference of external substances on the battery cells 10.

According to some embodiments of the present application, the present application further provides an electrical device, and the energy storage device includes the battery cell 10 described above.

In some embodiments, the electrical device may be a vehicle. A controller, a motor and a battery cell 10 may be disposed inside the vehicle, and the controller is configured to control the battery cell 10 to supply power to the motor.

According to some embodiments of the present application, reference is made to FIG. 4 to FIG. 11. Provided is a battery cell 10, the battery cell 10 may include a case 11 and an end cover. Along the first direction z, the case 11 has an opening 11a. An electrode assembly 12 is disposed inside the case 11, and the end cover is connected to the case 11 to close the opening 11a, so that the electrode assembly 12 is in a closed space. Along the second direction x, the case 11 includes two first walls 110 disposed opposite to each other. Along the third direction y, the case 11 includes two second walls 113 disposed opposite to each other. The second direction x, the third direction y and the first direction z are perpendicular to one another. The adjacent first walls 110 and second walls 113 are connected through corresponding corner areas 112, and the first walls 110, the second walls 113 and the corner areas 112 together form an opening 11a.

The first wall 110 has a first body portion 1100 and a first thickened portion 1101 arranged along the first direction z. The first body portion 1100 is farther away from the opening 11a than the first thickened portion 1101. The maximum thickness of the first thickened portion 1101 is greater than the thickness of the first body portion 1100. The second wall 113 has a third body portion 1130 and a third thickened portion 1131 arranged along the first direction z. The third body portion 1130 is farther away from the opening 11a than the third thickened portion 1131. The maximum thickness of the third thickened portion 1131 is greater than the thickness of the third body portion 1130.

The corner area 112 has a second body portion 1120 and a second thickened portion 1121 arranged along the first direction z. The second body portion 1120 is farther away from the opening 11a than the second thickened portion 1121. The maximum thickness of the second thickened portion 1121 is greater than the thickness of the second body portion 1120.

In the above solution, by providing the first thickened portion 1101 on the first wall 110 and the third thickened portion 1131 on the second wall 113, the problem of a heat-affected zone of lower strength formed in the case 11 due to welding, which causes the case 11 to crack due to insufficient strength when impacted, can be ameliorated, so that the battery 100 is more reliable. Moreover, by providing the second thickened portion 1121 in the corner area 112, the strength of the corner area 112 corresponding to the opening 11a can be improved, and the problem of stress concentration during demolding caused by providing the first thickened portion 1101 and the second thickened portion 1121, resulting in cracks in the corner area 112, is ameliorated, so that the battery cell 10 is more reliable.

In some embodiments, the thickness of the second thickened portion 1121 is T1, the thickness of the second body portion 1120 is T2, and 0 < E < 30% and E = (T1-T2)/T2 are satisfied. In other embodiments, 0 < E ≤ 16.7%.

Exemplarily, based on the battery cell 10 provided above, different E values and demolding feasibility are tested and verified. The test verification results can be seen in the following table:

| Scheme | T2(mm) | T1(mm) | E | Manufacturability Verification Result |
|---|---|---|---|---|
| 1 | 0.6 | 0.65 | 8.3% | OK |
| 2 | 0.6 | 0.7 | 16.7% | OK |
| 3 | 0.6 | 0.75 | 25% | OK |
| 4 | 0.6 | 0.78 | 30% | Case 11 bulging, NG |
| 5 | 0.6 | 0.8 | 33.3% | Case 11 bulging, NG |
| 6 | 0.6 | 0.81 | 35.0% | Case 11 bulging, NG |

It can be seen from the above table that the degree of thickening of the thickened portion of the corner area 112 can be within a certain range. For example, the thickness of the second thickened portion 1121 is T1, and the thickness of the second body portion 1120 is T2, and 0 < E < 30% is satisfied.

The foregoing descriptions are merely preferred embodiments of the present application, but are not intended to limit the present application. For those skilled in the art, the present application may have various modifications and variations. Any modifications, equivalent substitutions, improvements, etc. made within the spirit and principles of the present application should be included in the scope of protection of the present application.

## Claims

1. A battery cell, comprising:
a case, having an opening formed at an end thereof along a first direction, wherein along a circumference direction of the opening, the case comprises a first wall, a corner area, and a second wall which are connected in sequence, wherein:
the first wall comprises a first body portion and a first thickened portion arranged along the first direction, wherein the first body portion is farther away from the opening than the first thickened portion, and a maximum thickness of the first thickened portion is greater than a thickness of the first body portion; and
the corner area comprises a second body portion and a second thickened portion arranged along the first direction, wherein the second body portion is farther away from the opening than the second thickened portion, and a maximum thickness of the second thickened portion is greater than a thickness of the second body portion.

2. The battery cell according to claim 1, wherein the maximum thickness of the second thickened portion is greater than the maximum thickness of the first thickened portion.

3. The battery cell according to claim 1 or 2, wherein:
the maximum thickness of the second thickened portion is T1;
the thickness of the second body portion is T2;
the maximum thickness of the first thickened portion is t1; and
the thickness of the first body portion is t2,
wherein E ≥ F, E = (T1-T2)/T2, and F=(t1-t2)/t2.

4. The battery cell according to any one of claims 1 to 3, wherein the maximum thickness of the second thickened portion is T1, and the thickness of the second body portion is T2, wherein 0 < E < 30%, and E = (T1-T2)/T2.

5. The battery cell according to claim 4, wherein 0 < E ≤ 16.7%.

6. The battery cell according to any one of claims 1 to 5, wherein along the first direction, a distance from an end, located away from the opening, of the second thickened portion to the opening is L1, wherein 0 < L1 ≤ 20 mm.

7. The battery cell according to any one of claims 1 to 6, wherein along the first direction, a distance from an end, located away from the opening, of the first thickened portion to the opening is L2, wherein 0 < L2 ≤ 20 mm.

8. The battery cell according to any one of claims 1 to 7, wherein an area of an outer surface of the first wall is greater than an area of an outer surface of the second wall.

9. The battery cell according to any one of claims 1 to 8, wherein along a second direction, the case comprises two first walls disposed opposite to each other, and along a third direction, the case comprises two second walls disposed opposite to each other, wherein:
the second direction, the third direction, and the first direction are perpendicular to one another; and
a first wall and a second wall adjacent to each other are connected through a corresponding corner area, and the first wall, the second wall, and the corner area together form the opening.

10. The battery cell according to any one of claims 1 to 9, wherein the second wall has a third body portion and a third thickened portion arranged along the first direction, wherein the third body portion is farther away from the opening than the third thickened portion, and a maximum thickness of the third thickened portion is greater than a thickness of the third body portion.

11. The battery cell according to claim 10, wherein the maximum thickness of the second thickened portion is greater than the maximum thickness of the third thickened portion.

12. The battery cell according to claim 10 or 11, wherein:
the maximum thickness of the second thickened portion is T1;
the thickness of the second body portion is T2;
the maximum thickness of the third thickened portion is t3; and
the thickness of the third body portion is t4;
wherein E ≥ G, E = (T1-T2)/T2, and G=(t3-t4)/t4.

13. The battery cell according to any one of claims 10 to 12, wherein along the first direction, a distance from an end, located away from the opening, of the third thickened portion to the opening is L3, wherein 0 < L3 ≤ 20 mm.

14. The battery cell according to any one of claims 10 to 13, wherein:
the battery cell further comprises an end cover, the end cover closing the opening; and
the third thickened portion comprises a first section and a second section connected to each other, wherein:
the first section, the second section, and the third body portion are distributed in sequence along the first direction;
a maximum thickness of the second section is greater than the thickness of the third body portion, and the maximum thickness of the second section is greater than a maximum thickness of the first section; and
the end cover is connected to the first section.

15. The battery cell according to claim 14, wherein a first step surface is formed between the second section and the first section, and the end cover is lapped on the first step surface.

16. The battery cell according to any one of claims 1 to 15, wherein:
the battery cell further comprises an end cover, the end cover closing the opening; and
the second thickened portion comprises a third section and a fourth section connected to each other, wherein:
the third section, the fourth section, and the second body portion are distributed in sequence along the first direction;
a maximum thickness of the fourth section is greater than the thickness of the second body portion, and the maximum thickness of the fourth section is greater than a maximum thickness of the third section; and
the end cover is connected to the third section.

17. The battery cell according to claim 16, wherein a second step surface is formed between the fourth section and the third section, and the end cover is lapped on the second step surface.

18. The battery cell according to any one of claims 1 to 17, wherein the battery cell further comprises an end cover welded to the second thickened portion to form a fusion zone, wherein an average grain size of the second thickened portion other than the fusion zone is greater than an average grain size of the second body portion, wherein the average grain size is an average grain size of grains in the first direction.

19. The battery cell according to claim 18, wherein on a cross section of the corner area parallel to the first direction, in a portion of the second thickened portion below the fusion zone, a number of grains in a width direction of the cross section is greater than or equal to 15.

20. The battery cell according to claim 18 or 19, wherein:
the average grain size of the second thickened portion other than the fusion zone is in a range of 70 µm to 1200 µm; and/or
the average grain size of the second body portion is in a range of 30 µm to 1000 µm; and/or
a maximum wall thickness of the end cover is 0.25 mm to 3 mm.

21. A battery, comprising the battery cell according to any one of claims 1 to 20.

22. An energy storage device, comprising the battery cell according to any one of claims 1 to 20.

23. An electrical device, comprising the battery cell according to any one of claims 1 to 20.
